# DEMANDE DE BREVET EUROPEEN

(11) **EP 4 682 421 A2**
(43) Date de publication de la demande: **21.01.2026**
(21) Numéro de dépôt: 25219698.5
(22) Date de dépôt: 22.04.2022
(51) Int. Cl.: F16L 43/00

(54) **DISPOSITIF DE RACCORDEMENT COUDÉ MULTI-ANGLES**

(30) Priorité: 25.04.2021 FR 2104274; 21.10.2021 FR 2111225; 14.04.2022 FR 2203473
(62) Demande divisionnaire de: 22724484.5
(71) Demandeur: Ribon, Benoit, 30150 Roquemaure (FR)
(72) Inventeur: Ribon, Benoit, 30150 Roquemaure (FR)

(57) **Abrégé**

L'invention concerne un dispositif de raccordement coudé multi-angles modulaire comprenant un module courbé (B2) formé d'une succession d'anneaux cylindriques séparés par des éléments de liaison annelés définissant des intervalles angulaires prédéterminés. Le module est sécable afin de permettre l'obtention d'un angle choisi entre 1° et 360°. Deux anneaux peuvent être adjacents sans élément de liaison. Tout anneau situé en extrémité après coupe devient un embout fonctionnel. Le module peut être configuré entièrement mâle, entièrement femelle ou mixte. Les anneaux peuvent comporter des butées périphériques et des zones ou repères facilitant la coupe. Un embout optionnel peut être ajouté et recevoir un ou plusieurs joints d'étanchéité. Le dispositif peut présenter une section circulaire, carrée, rectangulaire ou polygonale et est destiné au transport de liquides, de gaz ou d'éléments solides filaires.

## Description

### Domaine technique

La présente invention concerne le domaine du transport de fluides, de gaz ou d'éléments solides filaires, notamment dans les secteurs du bâtiment, des travaux publics et des réseaux techniques. Elle porte plus particulièrement sur un dispositif de raccordement multi-angles modulaire, apte à former un coude dont l'angle peut être sélectionné librement entre 1° et 360°, tout en conservant une géométrie stable après installation.

### Technique antérieure

Les coudes rigides du commerce ne permettent que des angles standards fixes, sans possibilité d'adaptation aux contraintes géométriques spécifiques des chantiers.

Il existe des dispositifs de raccordement flexibles, notamment les multi-coudes en matériau souple décrits dans EP0913611 ou DE815740C. Ces dispositifs comportent généralement deux manchons reliés par une portion flexible. Cependant, leur caractère non rigide peut compromettre la tenue mécanique, la stabilité et l'étanchéité requises pour des installations durables.

D'autres systèmes utilisent plusieurs segments coudés prédéfinis, permettant quelques angles fixes, typiquement entre 22° et 87°. Ces solutions restent limitées à des géométries prédéterminées et ne permettent pas d'obtenir un angle de raccordement sur mesure.

Il existe donc un besoin pour un dispositif présentant une géométrie définie, assurant une stabilité angulaire après installation, tout en offrant une modularité de coupe permettant d'obtenir un angle précis, choisi librement entre 1° et 360°.

### Résumé de l'invention

L'invention propose un dispositif comprenant principalement :
- un module courbé sensiblement cylindrique (B2) formé d'une succession d'anneaux cylindriques (8) séparés par des éléments de liaison annelés (9) définissant des intervalles angulaires prédéterminés ;
- le module B2 étant sécable afin d'obtenir un angle choisi entre 1° et 360° ;
- deux anneaux ou plus pouvant être adjacents sans élément de liaison intermédiaire, formant une portion rectiligne ou sensiblement rectiligne ;
- tout anneau pouvant devenir un embout fonctionnel après découpe ;
- le module B2 étant configurable entièrement mâle, entièrement femelle ou mixte ;
- les anneaux pouvant comporter une butée périphérique (14) intégrale, partielle, intermittente, alternée ou irrégulière ;
- au moins un embout optionnel (1), mâle ou femelle, pouvant être ajouté au dispositif ;
- au moins un anneau et/ou l'embout pouvant recevoir un joint d'étanchéité, monté directement, sur bague ou en gorge ;
- des sections sensiblement circulaire, carrée, rectangulaire ou polygonale.

Le dispositif assure à la fois flexibilité d'usage, précision angulaire, rigidité structurelle et étanchéité fiable.

### Description détaillée

### Structure générale du module B2

Le module B2 comprend une succession d'anneaux cylindriques ou sensiblement cylindriques (8), séparés par des éléments de liaison annelés (9).

Deux anneaux ou plus peuvent également être directement adjacents, sans élément de liaison, formant une portion dépourvue de variation angulaire perceptible.

### Éléments de liaison annelés

Chaque élément annelé (9) présente une projection longitudinale s'apparentant à un triangle isocèle.

Il définit un intervalle angulaire prédéterminé entre deux anneaux.

Conformément à l'invention, au moins un élément de liaison (9) peut comporter ou former, sur tout ou partie de sa longueur :
- une zone d'amincissement,
- une zone de renfort,
- une surépaisseur ou une sous-épaisseur localisée ou généralisée,
- un marquage, trait, repère ou protubérance visuelle ou tactile destinés à faciliter la coupe.

### Anneaux devenant embouts

Lorsqu'un anneau se retrouve en extrémité du module à la suite d'une coupe, il constitue l'embout fonctionnel de raccordement, indépendamment de la portion retirée.

Tout anneau (8) est donc apte à devenir embout mâle ou femelle en fonction de la configuration initiale du module.

### Fonction sécable

La coupe destinée à obtenir l'angle souhaité peut être réalisée :
- au niveau d'un élément de liaison annelé (9), et/ou
- au niveau d'un anneau (8).

La zone de coupe peut être située en tout point de ladite portion.

Les angles résultent de la soustraction et/ou de l'addition des intervalles angulaires prédéterminés. La courbure totale du module non sectionné peut atteindre 360°.

### Configurations mâle / femelle

(Le module B2 peut être configuré :
- entièrement mâle,
- entièrement femelle,
- ou selon une configuration mixte comportant des anneaux mâles et des anneaux femelles.

### Butées périphériques

Les anneaux (8) peuvent comporter une butée périphérique (14) :
- intégrale (360°),
- partielle,
- intermittente,
- alternée,
- ou irrégulièrement répartie.

### Embout optionnel A (1) et joints d'étanchéité

Le dispositif peut comprendre au moins un embout optionnel (1), mâle ou femelle, apte à être relié au module B2 directement ou via un élément annelé.

Au moins un anneau (8) et/ou l'embout optionnel (1) peut être muni ou apte à recevoir un joint d'étanchéité :
monté directement, sur bague, ou logé dans une gorge.

### Variantes de section

Les anneaux, éléments de liaison et/ou embouts peuvent présenter une section :
- sensiblement circulaire,
- sensiblement carrée,
- sensiblement rectangulaire,
- ou sensiblement polygonale.

### Matériaux

Le dispositif peut être réalisé en PVC, PP, PE, PVDF, polyoléfine, fibre, fibre-ciment, grès, béton, zinc, acier, aluminium, cuivre, alliages métalliques ou résines.

### Dimensions

Le diamètre extérieur nominal peut être compris entre 10 et 2000 mm, de préférence 20 à 1000 mm,
plus préférentiellement 32 à 630 mm.

### Assemblage

L'assemblage entre deux éléments du dispositif et/ou la connexion du dispositif à une canalisation peut être réalisé par :
- emboîtement,
- collage,
- adhésif structural,
- vissage,
- sertissage,
- soudage,
- thermosoudage,
- chauffage,
- ou tout procédé mécanique, chimique ou thermique équivalent assurant une étanchéité optimale.

### Utilisation

Le dispositif est destiné au transport de liquides, de gaz ou d'éléments solides filaires dans tout réseau adapté.

Par addition de plusieurs intervalles angulaires prédéterminés ou par soustraction via coupe, la courbure totale obtenue peut atteindre 360°.

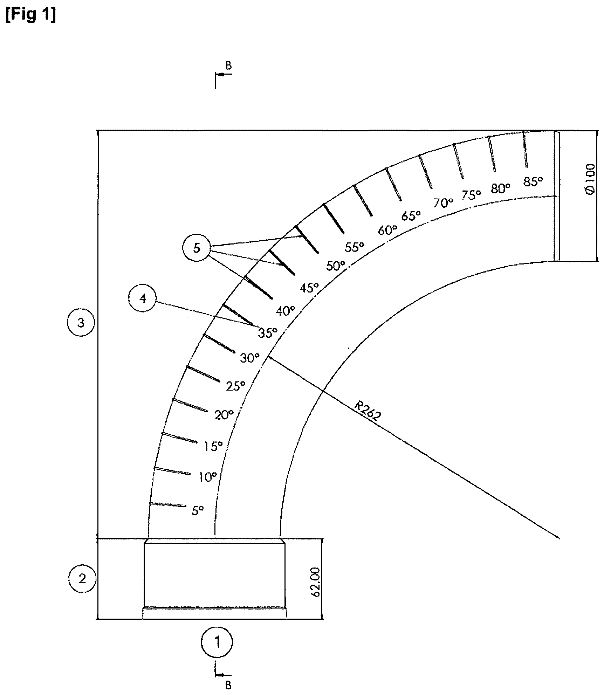

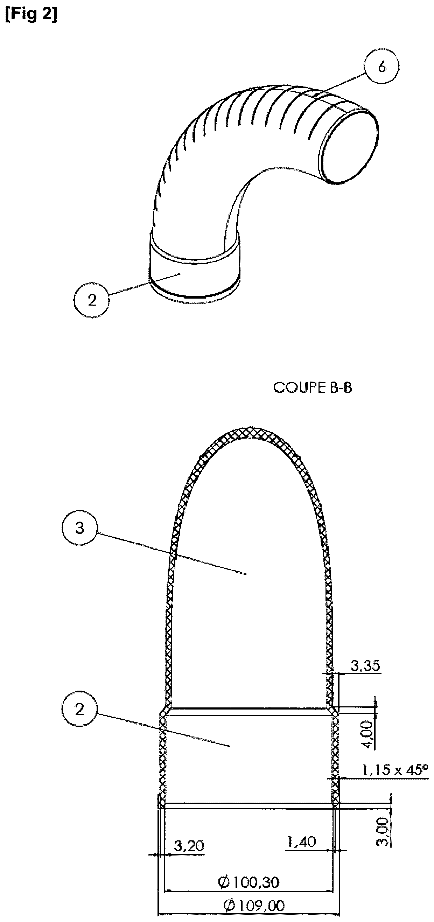

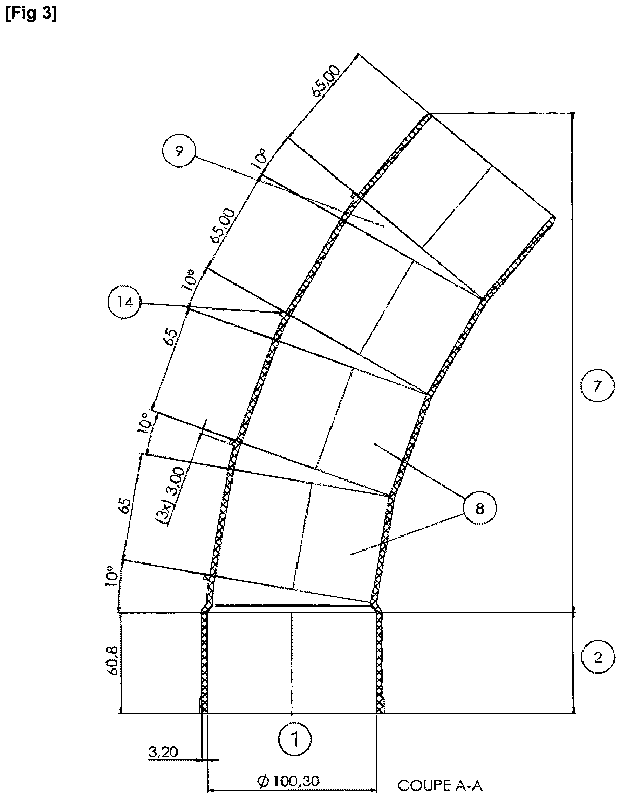

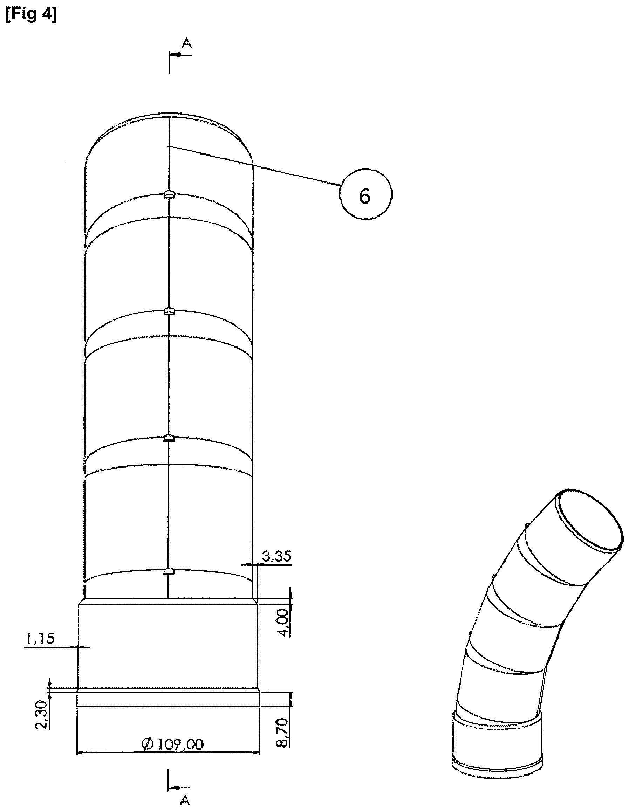

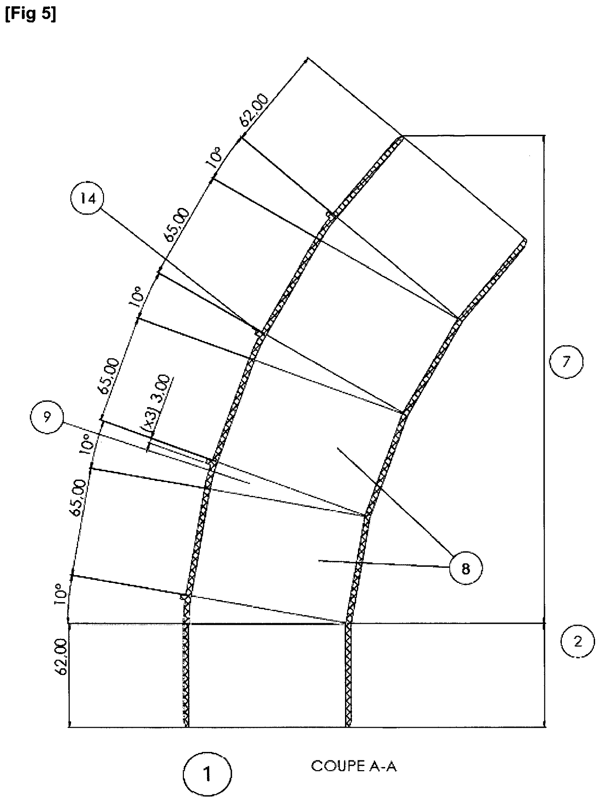

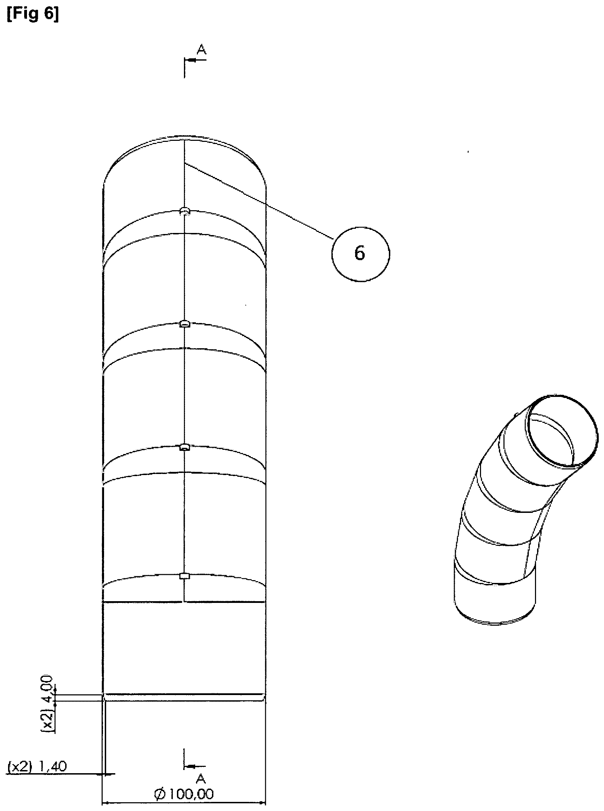

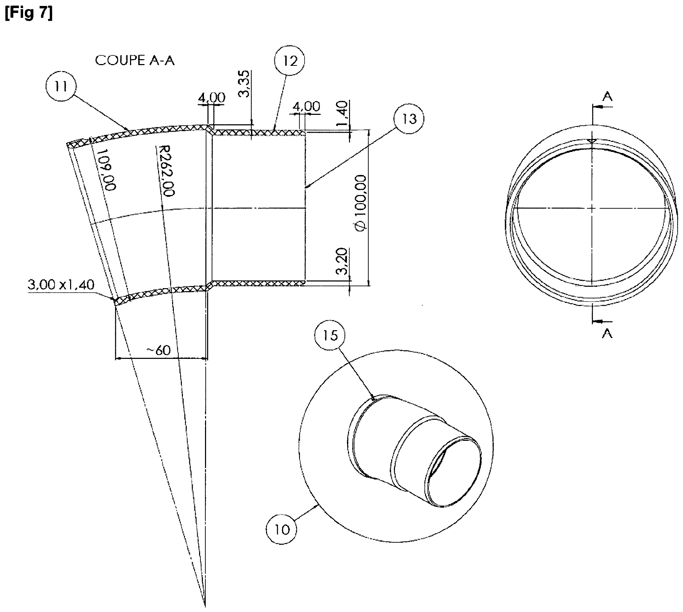

## Revendications

1. Dispositif de raccordement coudé multi-angles modulaire, comprenant un module courbé (B2) formé d'une succession d'anneaux cylindriques ou sensiblement cylindriques (8), séparés par des éléments de liaison annelés (9), lesdits éléments de liaison définissant des intervalles angulaires prédéterminés, le module B2 étant sécable de manière à permettre l'obtention d'un angle choisi compris entre 1° et 360°.

2. Dispositif selon la revendication 1, dans lequel deux anneaux cylindriques (8) ou plus peuvent être directement adjacents sans élément de liaison (9), la portion correspondante étant rectiligne, sensiblement rectiligne ou dépourvue de variation angulaire perceptible.

3. Dispositif selon l'une quelconque des revendications précédentes, dans lequel au moins un élément de liaison annelé (9) et/ou au moins un anneau cylindrique (8) présentent, sur tout ou partie de leur longueur, une zone d'amincissement, de renfort, de surépaisseur ou de sous-épaisseur, localisée ou généralisée, ou comportent un marquage, trait, repère ou protubérance visuelle ou tactile destinée à faciliter la coupe.

4. Dispositif selon l'une quelconque des revendications précédentes, dans lequel au moins un élément de liaison annelé (9) est directement apte à être sectionné afin de définir un angle correspondant à l'intervalle angulaire prédéterminé qu'il forme entre deux anneaux cylindriques (8).

5. Dispositif selon l'une quelconque des revendications précédentes, dans lequel au moins un anneau cylindrique (8) comprend une butée périphérique (14) intégrale, partielle, intermittente, alternée ou irrégulièrement répartie.

6. Dispositif selon l'une quelconque des revendications précédentes, dans lequel tout anneau (8) est apte à constituer un embout de raccordement fonctionnel lorsque, à la suite d'un sectionnement, il se trouve en extrémité du module, indépendamment de la portion retirée.

7. Dispositif selon l'une quelconque des revendications précédentes, dans lequel le module B2 est configurable dans son ensemble en version entièrement mâle, entièrement femelle ou selon une configuration mixte comportant des anneaux mâles et femelles.

8. Dispositif selon l'une quelconque des revendications précédentes, comprenant au moins un embout optionnel (1), mâle ou femelle, apte à être relié au module B2 soit directement, soit au moyen d'un élément de liaison annelé.

9. Dispositif selon l'une quelconque des revendications précédentes, dans lequel au moins un anneau (8) et/ou l'embout optionnel (1) est muni ou apte à recevoir un ou plusieurs joints d'étanchéité, montés directement, sur bague ou logés dans une gorge, de manière à assurer une connexion étanche avec un élément de canalisation compatible.

10. Dispositif selon l'une quelconque des revendications précédentes, dans lequel les anneaux (8), les éléments de liaison (9) et/ou l'embout optionnel (1) sont réalisés en PVC, PP, PE, PVDF, polyoléfine, fibre, fibre-ciment, grès, béton, zinc, acier, aluminium, cuivre, alliages métalliques ou résines, et présentent un diamètre extérieur nominal compris entre 10 et 2000 mm, de préférence entre 20 et 1000 mm, et plus préférentiellement entre 32 et 630 mm.

11. Dispositif selon l'une quelconque des revendications précédentes, dans lequel la coupe destinée à obtenir l'angle souhaité peut être réalisée au niveau d'un élément de liaison annelé (9) et/ou au niveau d'un anneau cylindrique (8), la zone de coupe pouvant être située en tout point de ladite portion, l'anneau (8) se trouvant en extrémité après section constituant alors l'embout fonctionnel de raccordement du dispositif, indépendamment de la portion retirée.

12. Dispositif selon l'une quelconque des revendications précédentes, dans lequel les anneaux (8) et/ou l'embout optionnel (1) présentent une section sensiblement circulaire, sensiblement carrée, sensiblement rectangulaire ou sensiblement polygonale.

13. Dispositif selon l'une quelconque des revendications précédentes, dans lequel l'assemblage entre deux éléments du dispositif et/ou la connexion du dispositif à un réseau, une canalisation ou un élément de tuyauterie est réalisée par emboîtement, collage, adhésif structural, vissage, sertissage, soudage, thermosoudage, chauffage, ou par tout procédé mécanique, chimique ou thermique équivalent assurant une étanchéité optimale.

14. Dispositif selon l'une quelconque des revendications précédentes, dans lequel la projection longitudinale de chaque élément de liaison annelé (9) s'apparente à un triangle isocèle.

15. Utilisation du dispositif selon l'une quelconque des revendications précédentes pour le transport de liquides, de gaz ou d'éléments solides filaires, ledit dispositif permettant d'obtenir, par addition et/ou soustraction de plusieurs intervalles angulaires prédéterminés, une courbure totale pouvant aller jusqu'à 360°.
